# EUROPÄISCHE PATENTANMELDUNG

(11) **EP 0 723 861 A2**
(43) Veröffentlichungstag der Anmeldung: **31.07.1996**
(21) Anmeldenummer: 96100309.2
(22) Anmeldetag: 16.01.1996
(51) Int. Cl.: B41C 1/00

(54) **Verfahren und Vorrichtung zur Herstellung eines konfektionierten Lichtwellenleiterkabels**

(30) Priorität: 16.01.1995 CH 121/95
(71) Anmelder: HUBER & SUHNER AG, CH-9100 Herisau (CH)
(72) Erfinder: Messmer, Roland, CH-9104 Walstatt (CH); Koller, Hans-Rudolf, CH-9127 St. Peterzell (CH)
(74) Vertreter: White, William

(57) **Zusammenfassung**

Die Bündel-Adern (10a) eines ankommenden Lichtwellenleiterkabels (10) müssen vor dem Anschliessen in einem Gerät vereinzelt werden, damit sie dann in einem Stecker oder in einem Rangierchassis angeschlossen werden können. Zur Realisierung ist eine Sockelplatte (1) mit wenigstens einer Einsatzbuchse (2) zur Aufnahme einer Zentrierhülse (3), ein Träger (5) zur Halterung von den Einsatzbuchsen (2) zugeordneten, und auf diese ausgerichteten Rohren (6) zur Aufnahme und Führung der in Führungshülsen (4) eingesetzten Schutzröhrchen (8) bis zu der Führungshülse (4), vorhanden. Die Schutzröhrchen (8) stehen bei den Bohrungen der Zentrierhülse (3) an und es ist ein Hohlraum zur Aufnahme eines Klebstoffes zwischen der Führungshülse (4) und der Zentrierhülse (3) gebildet. der seitlich durch die Wandung der Einsatzbuchse (2) begrenzt ist. Damit können die Schutzröhrchen (8) in einem Vergusszapfen (9) gehaltert werden und die Bündel-Adern (10a) können vereinzelt und in Schutzröhrchen (8) und ebenfalls als Bündel einem Kabelzugkopf (25) zugeführt werden. Der Kabelendhalter (11) und der Kabelzugkopf (25) können durch ein Schutzrohr (19) gegenüber Umwelteinflüssen gesichert miteinander verbunden werden, wodurch die Bündel-Adern (10a) sicher vor Feuchtigkeit geschützt sind.

## Beschreibung

Die vorliegende Erfindung betrifft ein Verfahren zum konfektionieren eines Lichtwellenleiterkabels indem die mit primärer Isolation versehenen Bündel-Adern einzeln in Schutzröhrchen eingezogen werden nach dem Oberbegriff des unabhängigen Anspruchs 1, ferner betrifft die Erfindung eine Vorrichtung zur Durchführung des Verfahrens nach dem Oberbegriff des Anspruchs 3, sowie ein einziehbares, fertig konfektioniertes Lichtwellenleiterkabel hergestellt nach dem Verfahren, gemäss dem Oberbegriff des Anspruchs 6.

Für inhaus Verkabelungen, sowie für Verkabelungen über kurze Strecken ausser Hauses werden von den Kabelherstellern fertig konfektionierte Lichtwellenleiterkabel zur Verfügung gestellt. Bei diesen fertig konfektionierten Kabeln sind die einzelnen Lichtwellenleiteradern mit ihren primären Isolationen vereinzelt und entweder schon in Anschlusselementen eingebunden oder in einheitlich zugeschnittenen Schutzröhrchen für den freien Anschluss in Geräten oder Verteilern bereitgestellt. Es ist dabei wichtig, dass einerseits das Kabel in einem Kabelendhalter zugfest gehaltert ist und dass anderseits die Schutzröhrchen mit den darin enthaltenen Lichtwellenleiteradern feuchtigkeitssicher zum Endverbraucher hinkommen, der dann lediglich die Bündel-Adern an seinen Geräten anzuschliessen hat. Dazu sind schon verschiedentlich Vorrichtungen bekannt geworden, mit denen die Bündel-Adern des ankommenden Kabels vereinzelt und so in einem Stecker oder in einem Rangierchassis angeschlossen werden. Bis heute ist aber noch kein einziehbares, fertig konfektioniertes Lichtwellenleiterkabel bekannt geworden, durch das die Bündel-Adern in an sich beliebiger Länge und in feuchtigkeitsgeschützter und mechanisch gesicherter Art zulieferbar ist.

Dementsprechend ist es eine Aufgabe, Wege aufzuzeigen, wonach fertig konfektionierte Lichtwellenleiterkabel transportfähig geschützt hergestellt werden können.

Erfindungsgemäss wird dies durch ein Verfahren ermöglicht, das dadurch gekennzeichnet ist, dass die Schutzröhrchen je einzeln in eine Bohrung in einer Ausrichthülse wenigstens hineingestossen werden, dass eine Zentrierbuchse mit geometrisch identisch angeorneten Bohrungen wie die Bohrungen in der Ausrichthülse auf die Ausrichthülse ausgerichtet wird, dass der Zwischenraum zwischen Zentrierbuchse und Ausrichthülse mit aushärtendem Klebstoff gefüllt wird, und dass nach dem Aushärten von dem so gebildeten Vergusszapfen sowohl Zentrierbuchse als auch Ausrichthülse entfernt werden.

Eine Vorrichtung zur Durchführung des Verfahrens ist gekennzeichnet durch eine Sockelplatte mit wenigstens einer Einsatzbuchse zur Aufnahme der Zentrierhülse, einen Träger zur Halterung von den Einsatzbuchsen zugeordneten, und auf diese ausgerichteten Rohren zur Aufnahme und Führung der Schutzröhrchen bis zu und in die Bohrungen in der Führungshülsen hinein, derart, dass diese bei den Bohrungen der Zentrierhülse an dieser anstehen und ein Hohlraum für die Aufnahme des Klebstoffes zwischen der Führungshülse und der Zentrierhülse gebildet ist, der seitlich durch die Wandung der Einsatzbuchse begrenzt ist.

Ein nach dem Verfahren hergestelltes fertig konfektioniertes Lichtwellenleiterkabel ist dadurch gekennzeichnet, dass die mit primärer Isolation versehenen Bündel-Adern eines Lichtwellenleiterkabels einzeln in die mittels der Ausrichtbuchse geordneten und auf die Bohrungen in der Einsatzbuchse ausgerichteten, durch Klebstoff zu einem Vergusszapfen einstückig zusammengehaltenen Schutzröhrchen eingelegt sind, dass das Lichtwellenleiterkabel in einen Kabelendhalter mit Zugentlastung für beispielsweise Aramidfasern des Lichtwellenleiterkabels eingesetzt ist, dass ferner die freien Enden der die Bündel-Adern enthaltenden Schutzröhrchen in einem Kabelzugkopf zusammengefasst sind, und dass der Kabelzugkopf und die Kabelendhülse mit einem auf die Länge der Lichtwellenleiteradern abgestimmten Schutzmantelrohr zusammmengehalten sind.

Nachfolgend wird ein Ausführungsbeispiel der Erfindung anhand der Zeichnung erläutert. Es zeigen:
- Fig.1: eine Draufsicht auf die Vorrichtung zur Vorbereitung der Anordnung mit Schutzröhrchen für die Herstellung fertig konfektionierter Lichtwellenleiterkabel,
- Fig.2: eine Schnittansicht durch die Vorrichtung nach Fig.1 geschnitten nach der Schnittlinie A-A,
- Fig.3: eine axiale Schnittansicht eines Kabelendhalters, und

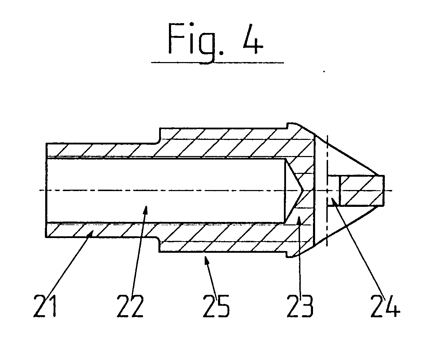

- Fig.4: eine axiale Schnittansicht einer Kabelzugkopf.

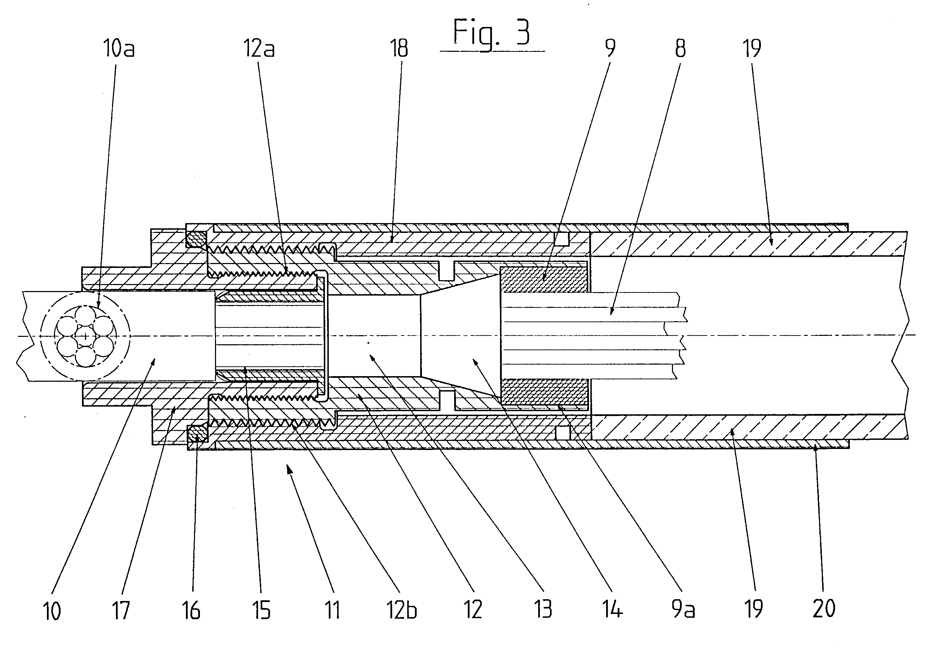

Die Schnittansicht gemäss Fig.3 zeigt den Kabelendhalter 11 in den ein Lichtwellenleiterkabel 10 mit beispielsweise Bündel-Adern 10a, die beispielsweise je 4 einzelne Adern umfassen können, einzusetzen ist. Das entmantelte Ende des Kabels 10 wird mittels einer Tülle 15 in einer Primärhülse 17 mit den beilaufenden zugentlastenden Fasern gehaltert. Die Bündel-Adern sind über eine grössere Länge, beispielsweise 50 cm oder mehr, freigelegt. Diese werden durch die Tülle 15 gestossen und Tülle 15 und Primärhülse 17 werden in der Verteilerhülse 12 mittels des Gewindes 12a festgehalten. Die Verteilerhülse 12 weist vier Hauptteile auf: einen Aufnahmeteil 12 mit dem Gewinde 12a, einen zylindrischen Mittelteil 13 mit anschliessender kegelstumpfförmigen Ausweitung 14 und ein Aufnahmeteil 9a für einen die Schutzröhrchen 8 halternden Vergusszapfen 9.

Die Verteilerhülse 12 mit der Tülle 15 und der eingeschraubten Primärhülse 17 wird mittels ihres Aussengewindes 12b in eine Haltehülse 18 eingesetzt. An die Haltehülse 18 ist ein Schutzmantelschlauch 19 angestossen und mit ihr einstückig, beispielsweise durch einen Schrumpfschlauch 20, gasdicht verbunden.

Das andere Ende des Schutzmantelschlauches 19 ist in einem Kabelzugkopf 25 eingesetzt. Dieser ist an einer verjüngten zylindischen Hülse 21 ebenfalls mit einem Schrumpfschlauch versehen, um den Schutzmantelschlauch 19 auch hier gasdicht zu verschliessen. Dieser Kabelzugkopf 25 hat einen inneren Hohlraum 22 in den die Schutzröhrchen 8 mit den darin enthaltenen Adern eingebracht sind. Dieser Kabelzugkopf 25 besitzt an seinem Deckel 23 eine Halteöse 24 an der das Kabel 10 durch die vorgesehenen Rohre und/oder Durchführungen gezogen werden kann, ohne dass zu befürchten wäre, dass die Lichtwellenleiteradern zu Schaden kommen könnten.

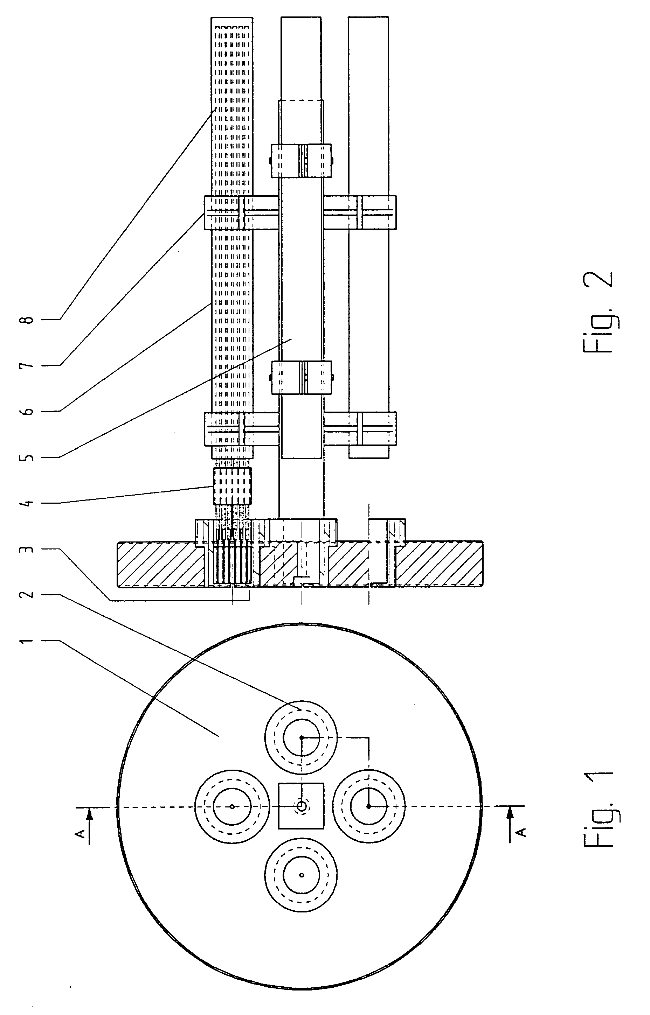

Das Einbringen der Adern in die Schutzröhrchen 8 führt zu einigen Problemen. Diese werden anhand der Fig 1 und 2 erläutert. So müssen die Schutzröhrchen 8 ausgerichtet gehaltert werden, damit die Adern ohne zu verbiegen hineingestossen werden können, Die Schutzröhrchen 8 müssen voneinander distanziert angeordnet und zueinander ausgerichtet werden. Zu diesem Zweck wurde eine Vorrichtung geschaffen, mit der die Schutzröhrchen 8 parallel zueinander ausgerichtet gehaltert werden können.

In einem Sockel 1 mit z.B. vier Einsatzbuchsen 2 werden Zentrierhülsen 3 in die Einsatzbuchsen 2 eingesetzt. Über jeder dieser vier Einsatzbuchsen 2 befindet sich ein Rohr 6 mit den Schutzröhrchen 8 darin. Die Schutzröhrchen 8 werden nun durch eine Führungshülse 4 gestossen und das Rohr 6 wird mittels Rohrschellen 7 an einem Träger 5 gehaltert. Damit wird dafür gesorgt, dass die Schutzröhrchen 8 in einem Abstand zu der Zentrierhülse 3 an der vorgegebenen Lage, nämlich genau über der jeweiligen Bohrung oder Führung angeordnet sind. Wenn diese genaue Ausrichtung erfolgt ist, wird der Zwischenraum zwischen Zentrierhülse 3 und Führungshülse 4 mit Klebstoff gefüllt. Als Klebstoff kann ein Epoxyharz verwendet werden. Nach der Aushärtung des Klebstoffen bilden die Schutzröhrchen 8 mit dem Klebstoffzapfen eine einstückige Einheit und Zentrierhülse 3 und Führungshülse 4 können entfernt werden, so dass nun die Schutzröhrchen in einem ausgerichteten Bündel in einem Vergusszapfen 9 einstückig gehaltert sind. Zur Fertigstellung des konfektionierten Lichtwellenleiterkabels müssen die einzelnen LWL-Fasern aus dem Kabel 10 in die Schutzröhrchen 8 gestossen werden und der Vergusszapfen 9 kann dann in das Aufnahmeteil 9a hineingestossen werden, in welchem dann der Vergusszapfen dichtend einsetzbar ist.

Mit dem weiter oben beschriebenen Endhalter 11 und dem Kabelzugkopf 25 bildet somit das Kabel 10 eine in Gebäuden und auch im Freien verlegbare Einheit mit vor Umwelteinflüssen geschützten, zugentlasteten Lichtwellenleiteradern.

## Patentansprüche

1. Verfahren zum Konfektionieren eines Lichtwellenleiterkabels indem die mit primärer Isolation versehenen Bündel-Adern (10a) einzeln in Schutzröhrchen (8) eingezogen werden, **dadurch gekennzeichnet**, dass die Schutzröhrchen (8) je einzeln in eine Bohrung in einer Ausrichthülse (4) wenigstens hineingestossen werden, dass eine Zentrierbuchse (3) mit geometrisch identisch angeorneten Bohrungen wie die Bohrungen in der Ausrichthülse auf die Ausrichthülse ausgerichtet wird, dass der Zwischenraum zwischen Zentrierbuchse und Ausrichthülse mit aushärtendem Klebstoff gefüllt wird, und dass nach dem Aushärten von dem so gebildeten Vergusszapfen (9) sowohl Zentrierbuchse (4) als auch Ausrichthülse (4) entfernt werden.

2. Verfahren nach Anspruch 1, **dadurch gekennzeichnet**, dass als Klebstoff ein Epoxyharz verwendet wird.

3. Vorrichtung zur Durchführung des Verfahrens nach Anspruch 1 **gekennzeichnet durch** eine Sockelplatte (1) mit wenigstens einer Einsatzbuchse (2) zur Aufnahme der Zentrierhülse (3), einen Träger (5) zur Halterung von den Einsatzbuchsen (2) zugeordneten, und auf diese ausgerichteten Rohren (6) zur Aufnahme und Führung der Schutzröhrchen (8) bis zu und in die Bohrungen in der Führungshülsen (4) hinein, derart, dass diese bei den Bohrungen der Zentrierhülse (3) an dieser anstehen und ein Hohlraum für die Aufnahme des Klebstoffes zwischen der Führungshülse (4) und der Zentrierhülse (3) gebildet ist, der seitlich durch die Wandung der Einsatzbuchse (2) begrenzt ist.

4. Vorrichtung nach Anspruch 3, **dadurch gekennzeichnet**, dass das wenigstens eine Rohr (6) am Träger (5) mittels Rohrschellen (7) während des Aushärtens des Klebstoffes starr festhaltbar ist.

5. Vorrichtung nach Anspruch 4, **dadurch gekennzeichnet**, dass vier Einsatzbuchsen (2) vorhanden sind, die mittig auf die Seitenflächen des prismatischen Trägers (5) mit quadratischem Querschnitt ausgerichtet sind.

6. Einziehbares, fertig konfektioniertes Lichtwellenleiterkabel hergestellt nach dem Verfahren gemäss Anspruch 1, **dadurch gekennzeichnet**, dass die mit primärer Isolation versehenen Bündel-Adern (10a) eines Lichtwellenleiterkabels (10) einzeln in die mittels der Ausrichtbuchse (4) geordneten und auf die Bohrungen in der Einsatzbuchse (3) ausgerichteten, durch Klebstoff zu einem Vergusszapfen (9) einstückig zusammengehaltenen Schutzröhrchen (8) eingelegt sind, dass das Lichtwellenleiterkabel (10) in einen Kabelendhalter (11) mit Zugentlastung für die Zugentlasatung des Lichtwellenleiterkabels (10) eingesetzt ist, dass ferner die freien Enden der die Bündel-Adern (10a) enthaltenden Schutzröhrchen (8) in einem Kabelzugkopf (25) zusammengefasst sind, und dass der Kabelzugkopf (25) und die Kabelendhülse (11) mit einem auf die Länge der Bündel-Adern (10a) abgestimmten Schutzmantelrohr (19) zusammmengehalten sind.
